# EUROPEAN PATENT APPLICATION

(11) **EP 2 189 486 A1**
(43) Date of publication of application: **26.05.2010**
(21) Application number: 08831096.6
(22) Date of filing: 08.09.2008
(51) Int. Cl.: C08G 63/06, C08J 5/00, C08K 5/49, C08L 67/04, C08L 101/16

(54) **LOW-MELT-VISCOSITY POLYGLYCOLIC ACID, PROCESS FOR PRODUCING THE SAME, AND USE OF THE LOW-MELT-VISCOSITY POLYGLYCOLIC ACID**

(30) Priority: 12.09.2007 JP 2007237070
(71) Applicant: Kureha Corporation, Chuo-ku Tokyo 103-8552 (JP)
(72) Inventor: AKUTSU, Fumio, Omitama-shi Ibaraki 311-3436 (JP); YAMANE, Kazuyuki, Iwaki-shi Fukushima 974-8686 (JP); KURUHARA, Nanako, Iwaki-shi Fukushima 974-8686 (JP)
(74) Representative: Albrecht, Thomas
(86) International application number: PCT/JP2008/066162
(87) International publication number: WO 2009/034942

(57) **Abstract**

A low melt viscosity polyglycolic acid having a melt viscosity of at most 100 Pa·s as measured at a temperature higher by 10°C than the melting point of the polyglycolic acid and a shear rate of 122 sec⁻¹, a temperature at 3%-weight loss on heating of at least 280°C and a water content of at most 500 ppm, and being in a solid state at a temperature of 20+15°C, and a production process of the low melt viscosity polyglycolic acid including a water vapor absorption step and a heat treatment step for a high melt viscosity polyglycolic acid being in a solid state.

## Description

### TECHNICAL FIELD

The present invention relates to a low melt viscosity polyglycolic acid and a production process thereof. The low melt viscosity polyglycolic acid according to the present invention is excellent in melt flowability, melt stability, moldability and adhesion to other materials and thus can be applied to a wide variety of technical fields which require these various properties. For example, the low melt viscosity polyglycolic acid according to the present invention is suitably used for producing an integrated molded product of a molded product of another synthetic resin with a polyglycolic acid layer by injection-molding the polyglycolic acid into a mold, in which the synthetic resin molded product has been arranged.

### BACKGROUND ART

A polyglycolic acid is a sort of aliphatic polyester resin containing aliphatic ester linkages in its molecular chain and generally synthesized by ring-opening polymerization of glycolide or polycondensation of glycolic acid. The polyglycolic acid is a biodegradable resin known to be degraded by microorganisms or enzymes present in the natural world such as soil and sea.

The polyglycolic acid is excellent in gas barrier properties and hence suitable for use in packaging materials such as films, sheets, bottles and the like having a single-layer or multi-layer structure. In addition, the polyglycolic acid is used in a wide variety of technical fields as various kinds of injection-molded products, compression-molded products, extruded products, etc. Further, the polyglycolic acid has *in vivo* degradability and absorbability and is hence utilized as medical polymer materials for surgical sutures, artificial skins, etc as well.

The polyglycolic acid has a melting point within a range of from 215°C to 225°C in the form of a homopolymer and is a relatively high-melting point polymer material. The melting point of the polyglycolic acid somewhat varies according to the production process thereof or thermal hysteresis applied by a subsequent heat treatment or the like. The melting point of the polyglycolic acid can be lowered by copolymerizing it with another monomer. For example, glycolide is copolymerized with, for example, a cyclic monomer such as lactide, a lactone, ethylene oxalate or trimethylene carbonate, whereby a copolymer lowered in melting point can be obtained. However, when the proportion of another monomer (i.e., a comonomer) copolymerized with glycolide or glycolic acid becomes high, the various properties such as gas barrier properties and crystallinity that the polyglycolic acid inherently has may be lowered in some cases.

The polyglycolic acid has a feature that its melt viscosity upon melt forming or molding is relatively high in addition to the relatively high melting point. When the polyglycolic acid is formed or molded singly or in combination with another resin material into single-layer or multi-layer films, sheets, bottles or molded products having various forms by extrusion, injection molding, blow molding or the like, no particular problem is caused even when the melting point and melt viscosity thereof are relatively high. The high melting point and melt viscosity themselves of the polyglycolic acid are features indicating that the polyglycolic acid has heat resistance and a high molecular weight.

However, the high melting point and melt viscosity of the polyglycolic acid may obstruct the development of new uses of the polyglycolic acid in some cases. For example, when the polyglycolic acid is injection-molded in the presence of a molded product of another synthetic resin arranged in a mold, thereby producing an integrated molded products of the synthetic resin molded product with a polyglycolic acid layer, the high melting viscosity of the polyglycolic acid is the cause that the synthetic resin molded product may be deformed in some cases. In other words, when the melt viscosity of the polyglycolic acid is high, there is need of conduct injection molding at a high temperature and a high pressure, so that the synthetic resin molded product within the mold may be deformed by the flow of the polyglycolic acid melted upon the injection molding in some cases.

More specifically, a circuit board molded by injection molding is included in particular injection-molded products. In recent years, there has been developed a system that a circuit board used in electric and electronic instruments is molded by injection molding of a synthetic resin. In the circuit board obtained by the injection molding of the synthetic resin, post processing such as drilling, beveling or punching after molding is unnecessary unlike a conventional circuit board composed of a laminated plate because via-holes, ribs, stand-offs and the like can be integrally molded.

In the molding of the circuit board by the injection molding, a technique of forming a circuit pattern on the surface of the synthetic resin molded product by a double molding process (also referred to as "two shot process") is developed. The double molding process is a process, in which an integrated molded product is molded by 2 moldings by dividing the process into a portion (easy-to-plate resin) for forming a circuit and a portion (hard-to-plate resin) for forming an insulating part, and a conductor circuit is then formed by a full additive process or the like.

In the first shot of the injection molding, a molded product (primary molded product) is molded with a synthetic resin A containing a catalyst (catalyst for electroless plating). This molded product is transferred to a separate mold or another cavity of the same mold. In the second shot, a synthetic resin B containing no catalyst is injected in the presence of the molded product arranged within the mold to cover the surface of the molded product excluding a portion, on which a circuit will be formed. A conductor circuit layer is formed on the surface of the molded product, which is exposed without being covered with the synthetic resin B, by electroless plating. Since the electroless plating layer is generally thin, this layer can be grown to a thickness suitable for the conductor circuit by subsequent electroplating. After the plating steps, the covering layer of the synthetic resin B is often left in the integrated state as it is. However, the layer may be removed.

As an example of other processes, there is a process comprising conducting electroless plating on the whole surface of the molded product of the synthetic resin A obtained by the first shot of the injection molding to form a thin plating layer and then injecting the synthetic resin B to integrally form a covering layer of the synthetic resin B on the surface of the molded product excluding a portion, on which a circuit will be formed. In this process, the thickness of the portion of the electroless plating layer on the molded product, which is exposed without being covered with the synthetic resin B, is thickened by electroplating. After the plating step, the covering layer of the synthetic resin B is removed together with the underlying thin electroless plating layer. As a result, a patterned plating layer is left on the surface of the injection-molded product of the synthetic resin A.

A typical circuit board obtained by such a double molding process is a three-dimensional injection-molded circuit part called MID (Molded Interconnect Device), in which a conductor circuit is three-dimensionally formed on the surface of an injection-molded product. MID is a three-dimensional wiring board with the injection-molded product of a synthetic resin and a wiring part integrated with each other and can contribute to rationalization of wiring, miniaturization of an electronic device part, improvement of assembly property, intradevice rationalization, space saving, etc. MID is applied to semiconductor packages such as light emitting diodes, three-dimensional printed wiring board, antenna parts of portable telephones, etc.

As the synthetic resin (the synthetic resin A) used in the circuit board by injection molding, is used, for example, a super engineering plastic such as a liquid crystal polymer or poly(phenylene sulfide); a thermoplastic aromatic polyester resin such as polybutylene terephthalate or polyethylene terephthalate; or a polyamide resin. In recent years, new resin materials for molding of boards, such as various kinds of cyclic olefin resins excellent in dielectric properties, low hygroscopicity, etc. have also be developed.

In the circuit board obtained by the double molding process, such as MID, further thickness reduction, miniaturization or weight reduction is difficult when the covering layer of the hard-to-plate resin secondarily molded is left on the product as it is. In addition, it is necessary to use a resin material excellent in heat resistance, insulating property, strength, chemical resistance, durability, etc. as the hard-to-plate resin (the synthetic resin B). When a high-performance resin material such as an engineering plastic is used as the hard-to-plate resin, it is necessary to conduct injection molding under a high pressure, so that it is necessary to heighten the height of a circuit portion of the molded product injection-molding with the easy-to-plate resin or widen the width of the circuit portion.

On the other hand, in order to remove the covering layer of the hard-to-plate resin from the circuit board, the hard-to-plate resin itself is required to satisfy various performance properties in addition to need of devising molding processing and post treatment steps. The hard-to-plate resin used as a mask or resist against plating is required to permit forming a covering layer having a precise circuit pattern by injection molding, be excellent in adhesion to the surface of the molded product of another synthetic resin or the electroless plating layer, have resistance to a plating solution used in electroless plating or electroplating, and permit being easily separated and removed in a post treatment step after molding.

In Japanese Patent Application Laid-Open No. 2002-344116 (Patent Literature 1) and Japanese Patent Application Laid-Open No. 2004-247354 (Patent Literature 2), it has been proposed to use an aliphatic polyester resin such as polylactic acid as such a hard-to-plate resin (hereinafter may referred to as "masking resin"). The aliphatic polyester resin is good in adhesion to other materials, and a covering layer thereof can be removed with an aqueous alkali solution in a post treatment step after plating. However, the aliphatic polyester resin is high in melt viscosity in addition to a relatively high melting point, so that a primary molded product for forming a circuit board, which has been arranged within a mold in advance, may be deformed in some cases when injection molding is conducted at a high temperature and a high pressure.

When an additive such as a plasticizer is contained in the aliphatic polyester resin for improving melt flowability upon injection molding, this additive volatilizes off or bleeds upon the injection molding to incur a possibility that adhesion to a molded product (primary molded product) of another synthetic resin may be lowered, precision moldability may be lowered, or a mold or circuit board may be contaminated. When the molecular weight of the aliphatic polyester resin is lowered, a gas component originated from low molecular weight materials such as oligomers formed upon synthesis is easy to occur, and the problems such as lowering of the adhesion to the primary molded product and contamination of the circuit board are easy to occur though the melt flowability is improved. The low molecular weight aliphatic polyester resin is difficult to be pelletized, so that the resin is poor in weighability in injection molding, and so it is difficult to conduct stable precision molding.

Under such state of the art, there is a demand for development of a polyglycolic acid excellent in flowability (referred to as "melt flowability") upon melt molding such as injection molding. When the melting point of a polyglycolic acid is lowered, melt flowability at a molding temperature of an ordinary polyglycolic acid homopolymer is improved. The melting point of the polyglycolic acid can be lowered by the process of being copolymerized with another monomer. However, great increase of the proportion of another monomer copolymerized is not always suitable for retaining the various properties inherent in the polyglycolic acid itself.

On the other hand, Japanese Patent Application Laid-Open No. 2003-20344 (Patent Literature 3) discloses a process, in which the polymerization degree of a polyglycolic acid is adjusted upon its synthesis to obtain a low melt viscosity polyglycolic acid. In the polyglycolic acid having a low melt viscosity, melt flowability at a molding temperature of an ordinary polyglycolic acid homopolymer is improved, so that it is possible to conduct injection molding under a relatively low pressure.

However, when the low melt viscosity polyglycolic acid obtained by adjusting the polymerization degree upon synthesis is heated to a temperature near to a melt-molding temperature, low molecular weight materials contained therein are easy to volatilize off as a gas component. In particular, it has been proved that a polyglycolic acid having an extremely low melt viscosity suitable for a masking resin used in production of a circuit board by the double molding process does not avoid mixing of low molecular weight materials such as oligomers upon synthesis, and so such a polyglycolic acid tends to volatilize off the gas component upon injection molding.

In addition, the polyglycolic acid having the extremely low melt viscosity suitable for the masking resin is difficult to be pelletized. Pellets of a synthetic resin are produced by a system such as cold cut that the synthetic resin is melted by means of an extruder, the melt is extruded into strand, and the strand is cut after cooling; hot cut that the strand is cut at an outlet of a die; or underwater cut that the strand is cut in water. However, the polyglycolic acid having the extremely low melt viscosity suitable for the masking resin is extremely difficult to form strand having a uniform diameter when melt-extruded into the strand from an extruder because the melt flowability thereof is markedly high. When it is intended to melt a polyglycolic acid having a particularly low melt viscosity by means of an extruder and continuously extrude the melt into strand from a die having a hole, the strand sags, and so it is substantially impossible to produce pellets. It is thus difficult to obtain pellets excellent in weighability and moldability by using the polyglycolic acid having the extremely low melt viscosity.

The reason why a synthetic resin is pelletized is that the pellets do not produce dust and are excellent in handling property, conveyability, weighability, moldability, etc. When additives are added to a synthetic resin, and the resin is then pelletized, pellets with the additive component uniformly dispersed therein can be obtained. The polyglycolic acid having the extremely low melt viscosity is difficult to be pelletized, so that it is poor in weighability in addition to poor handling property and conveyability, so that it is also difficult to conduct precision molding. When the low melt viscosity polyglycolic acid, which is not pelletized, is injection-molded as a masking resin, it is thus difficult to form a covering layer having a precise circuit pattern on the surface of a primary molded product.
Patent Literature 1: Japanese Patent Application Laid-Open No. 2002-344116
Patent Literature 2: Japanese Patent Application Laid-Open No. 2004-247354
Patent Literature 3: Japanese Patent Application Laid-Open No. 2003-20344

### DISCLOSURE OF THE INVENTION

### TECHNICAL PROBLEM

It is an object of the present invention to provide a low melt viscosity polyglycolic acid excellent in melt flowability and hard to generate a gas component upon melt molding, and a production process thereof.

Another object of the present invention is to provide a low melt viscosity polyglycolic acid excellent in weighability, adhesion to other materials, precision moldability into a fine circuit pattern, resistance to plating, solubility in an aqueous alkali solution, etc. in addition to the fact that melt flowability is excellent, and it is possible to conduct inject molding under a relatively low pressure, and a production process thereof.

A further object of the present invention is to provide a low melt viscosity polyglycolic acid suitable for production of an integrated molded product of a molded product of another synthetic resin with a polyglycolic acid layer by injecting the polyglycolic acid into a mold, in which the synthetic resin molded product has been arranged.

The present inventors have carried out an extensive investigation as to a process for obtaining a low melt viscosity polyglycolic acid excellent in melt flowability and hard to generate a gas component upon melt molding. As a result, the present inventors have reached a process with a conventional conception that a low melt viscosity polyglycolic acid is produced upon synthesis basically converted in the course of the research thereof.

Specifically, the present inventors have found that a polyglycolic acid having a melt viscosity greatly reduced is obtained in the form of pellets by a process comprising synthesizing a polyglycolic acid having such a relatively high melt viscosity that pellets can be formed, forming pellets from the resultant polyglycolic acid and then subjecting the pellets to a heat treatment after causing them to absorb water vapor.

According to the process of the present invention, a polyglycolic acid having an extremely low melt viscosity suitable for a masking resin used in production of a circuit board by the double molding process can be obtained in the form of pellets. In addition, it has been proved that this low melt viscosity polyglycolic acid is hard to generate the gas component upon melt molding unlike the low melt viscosity polyglycolic acid obtained by synthesis. The low melt viscosity polyglycolic acid is preferably in the form of pellets. However, it can be obtained as a solid polymer in any other form at ordinary temperature (20±15°C; i.e., a range of from 5 to 35°C). The present invention has been led to completion on the basis of these findings.

### SOLUTION TO PROBLEM

According to the present invention, there is thus provided a low melt viscosity polyglycolic acid having a melt viscosity of at most 100 Pa·s as measured at a temperature (Tm+10°C) higher by 10°C than the melting point Tm of the polyglycolic acid and a shear rate of 122 sec⁻¹, a temperature at 3%-weight loss on heating of at least 280°C and a water content of at most 500 ppm, and being in a solid state at a temperature of 20±15°C.

According to the present invention, there is also provided a production process of a low melt viscosity polyglycolic acid, comprising the following steps 1 and 2:
(1) a water vapor absorption step 1 of causing a polyglycolic acid having a melt viscosity exceeding 100 Pa·s as measured at a temperature (Tm+20°C) higher by 20°C than the melting point Tm of the polyglycolic acid and a shear rate of 122 sec⁻¹ and being in a solid state at a temperature of 20±15°C to absorb water vapor in the solid state to provide a water vapor-absorbed polyglycolic acid having a water content of at least 1,000 ppm; and
(2) a step 2 of subjecting the water vapor-absorbed polyglycolic acid to a heat treatment at a temperature within a range of from 60°C to a temperature (Tm-5°C) lower by 5°C than the melting point of the polyglycolic acid while retaining the solid state thereof to provide a low melt viscosity polyglycolic acid having a melt viscosity of at most 100 Pa·s as measured at a temperature (Tm+10°C) higher by 10°C than the melting point of the polyglycolic acid and a shear rate of 122 sec⁻¹, a temperature at 3%-weight loss on heating of at least 280°C and a water content of at most 500 ppm, and being in a solid state at a temperature of 20±15°C.

### ADVANTAGEOUS EFFECTS OF INVENTION

The low melt viscosity polyglycolic acid according to the present invention is excellent in melt flowability, so that a pressure upon injection molding can be reduced. The low melt viscosity polyglycolic acid according to the present invention is hard to generate a gas component upon melt molding such as injection molding, so that respective parts of a mold and a molding apparatus are not contaminated.

When the low melt viscosity polyglycolic acid according to the present invention is used as, for example, a masking resin for a circuit board by the double molding process, it is prevented to deform a primary molded product making up the circuit board upon injection molding of the masking resin or contaminate the circuit board with a gas component originated from the masking resin.

The low melt viscosity polyglycolic acid according to the present invention is excellent in weighability, adhesion to other materials, precision moldability into a fine pattern, resistance to plating, solubility in an aqueous alkali solution, etc.

According to the low melt viscosity polyglycolic acid of the present invention, a finely patterned thin film can be precisely molded on the surface of a molded product of another synthetic resin by injection molding, and the thin film is excellent in resistance to an electroplating solution or electroless plating solution and hard to deposit metal particles by plating, and can be removed with an aqueous alkali solution, so that the polyglycolic acid is suitable for use as a masking resin for MID.

Besides, the low melt viscosity polyglycolic acid according to the present invention can be applied to a wide variety of technical fields of which excellent melt flowability upon molding, precision moldability, adhesion to other materials, gas barrier properties and the like are required.

### BEST MODE FOR CARRYING OUT THE INVENTION

The polyglycolic acid useful in the practice of the present invention is a homopolymer or copolymer having a repeating unit represented by the following formula (1).

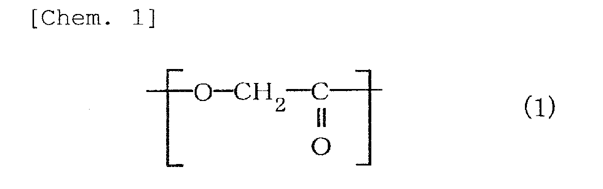

The proportion of the repeating unit represented by the formula (1) contained in the polyglycolic acid is generally at least 55 wt.%, preferably at least 60 wt.%, more preferably at least 70 wt.%, particularly preferably at least 80 wt.%, often at least 90 wt.%. The upper limit of the proportion is 100 wt.%. If the proportion of the recurring units represented by the formula (1) is too low, the properties inherent in the polyglycolic acid, such as gas heat resistance, crystallinity and barrier properties, are impaired.

The polyglycolic acid according to the present invention is a crystalline polymer having a melting point. Such a polyglycolic acid can be produced by a process in which glycolic acid, an alkyl glycolate or a glycolic acid salt is polycondensed; or a process of subjecting glycolide to ring-opening polymerization.

The ring-opening polymerization of glycolide is preferably conducted in the presence of a small amount of a catalyst. No particular limitation is imposed on the catalyst. As examples thereof, may be mentioned tin compounds such as tin halides (for example, tin dichloride, tin tetrachloride, etc.) and tin organic carboxylates (for example, tin octanoate and tin octylate); titanium compounds such as alkoxytitanates; aluminum compounds such as alkoxyaluminum; zirconium compounds such as zirconium acetylacetone; and antimony compounds such as antimony halides and antimony oxide. A homopolymer (i.e., polyglycolide) of polyglycolic acid can be obtained by subjecting glycolide to ring-opening polymerization by itself.

In order to produce a copolymer of glycolic acid as the polyglycolic acid, a process of copolymerizing a monomer such as glycolide or glycolic acid with various kinds of comonomers is adopted. As examples of the comonomers, may be mentioned cyclic monomers such as ethylene oxalate (i.e., 1,4-dioxane-2,3-dione), lactide, lactones (for example, β-propiolactone, β-butyrolactone, pivalolactone, γ-butyrolactone, δ-valerolactone, β-methyl-δ-valerolactone, ε-caprolactone, etc.), trimethylene carbonate, 1,3-dioxane, 1,4-dioxane-2-one (i.e., p-dioxanone) and 5,5-dimethyl-1,3-dioxane-2-one; hydroxycarboxylic acids such as lactic acid, 3-hydroxypropanoic acid, 3-hydroxybutanoic acid, 4-hydroxybutanoic acid and 6-hydroxycaproic acid, and alkyl esters thereof; substantially equimolar mixtures of an aliphatic diol such as ethylene glycol or 1,4-butanediol and an aliphatic dicarboxylic acid such as succinic acid or adipic acid or an alkyl ester thereof; and two or more compounds thereof. Glycolide and glycolic acid may also be used in combination.

Among these comonomers, the cyclic monomers such as lactide, lactones, trimethylene carbonate, p-dioxanone and 5,5-dimethyl-1,3-dioxane-2-one; and the hydroxycarboxylic acids such as lactic acid are preferred in that they are easy to be copolymerized, and a copolymer excellent in physical properties is easy to be obtained.

The comonomer is generally used in a proportion of at most 45 wt.%, preferably at most 40 wt.%, more preferably at most 30 wt.%, particularly preferably at most 20 wt.%, often at most 10 wt.% based on all monomers charged. When the proportion of the comonomer is high, the crystallinity of the resulting polymer is liable to be impaired. If the crystallinity of polyglycolic acid is impaired, its heat resistance, gas barrier properties, etc. are deteriorated.

A polymerizer for the polyglycolic acid may be suitably selected from among various kinds of apparatus such as extruder type, vertical type having a paddle blade, vertical type having a helical ribbon blade, horizontal type such as an extruder type or kneader type, ampoule type, tube type, and flat plate type (such as quadrangle, especially, rectangle).

The polymerization temperature can be preset within a range of from 120°C, which is a substantial polymerization-initiating temperature, to 300°C as necessary for the end application intended. The polymerization temperature is preferably 130 to 250°C, more preferably 140 to 220°C, particularly preferably 150 to 200°C. If the polymerization temperature is too high, a polymer formed tends to undergo thermal decomposition.

The polymerization time is within a range of from 2 minutes to 50 hours, preferably from 3 minutes to 30 hours, more preferably from 5 minutes to 18 hours. If the polymerization time is too short, it is hard to sufficiently advance the polymerization. If the time is too long, a polymer formed tends to be colored.

The melt viscosity of the polyglycolic acid used as a raw material in the present invention is generally higher than 100 Pa·s, preferably at least 200 Pa·s, more preferably at least 300 Pa·s, particularly preferably at least 500 Pa·s as measured at a temperature (Tm+20°C) higher by 20°C than the melting point Tm of the polyglycolic acid and a shear rate of 122 sec⁻¹. The upper limit of the melt viscosity of the polyglycolic acid as the raw material is generally 10,000 Pa·s, preferably 8,000 Pa·s, more preferably 5,000 Pa·s as measured at the above-described conditions. In many cases, a polyglycolic acid having a melt viscosity of 500 to 4,000 Pa·s may be preferably used.

The polyglycolic acid of the raw material may contain various kinds of additives such as other thermoplastic resins, fillers, heat stabilizers, light stabilizers, waterproofing agents, water repellants, lubricants, parting agents, coupling agents, pigments and dyes if desired. These various kinds of additives are used in their effective amounts as necessary for the end application intended.

A compound capable of developing a heat stabilizing effect may be added as a heat stabilizer to the polyglycolic acid of the raw material. The polyglycolic acid is generally insufficient in melt stability and tends to easily generate a gas component upon its melt processing, and such a tendency is great as the melt viscosity becomes low in particular. In the conventional polyglycolic acid having a high melt viscosity, a temperature (referred to as "the temperature at 3%-weight loss on heating") at which the weight loss upon heating reaches 3% is about 300°C. In case of a low melt viscosity polyglycolic acid obtained by adjusting a polymerization degree by synthesis, the temperature at 3%-weight loss on heating is often lowered to 260°C or lower.

However, many of additives generally used in a field of polymers, such as a catalyst deactivator, a nucleating agent, a plasticizer, an antioxidant and a heat stabilizer, deteriorate the melt stability of the polyglycolic acid. Accordingly, in order to improve the melt stability of the polyglycolic acid, it is necessary to select a compound functioning as a heat stabilizer.

The low melt viscosity polyglycolic acid obtained by the production process of the present invention has a feature that the temperature at 3%-weight loss on heating is high. In order to more improve the heat stability thereof, however, it is preferable to add a heat stabilizer to the high melt viscosity polyglycolic acid used as a raw material. The polyglycolic acid, whose melt viscosity has been lowered, is difficult to be pelletized, so that it is also difficult to add a heat stabilizer to the low melt viscosity polyglycolic acid to pelletize it.

Such a heat stabilizer can be selected from among compounds conventionally known as antioxidants or heat stabilizers for polymers, and may also be selected from among heavy metal deactivators, catalyst deactivators, nucleating agents, etc. which have not been used as heat stabilizers for polymers. As heat stabilizers, are preferred heavy metal deactivators, phosphates having a pentaerythritol skeleton structure, phosphorus compounds having at least one hydroxyl group and at least one long-chain alkyl ester group, metal carbonates, etc. These compounds may be used either singly or in any combination thereof.

Many of phosphorus compounds such as phosphite antioxidants rather exhibit an effect to inhibit the melt stability of the polyglycolic acid. On the other hand, phosphates having a pentaerythritol skeleton structure represented by the following formula (2): 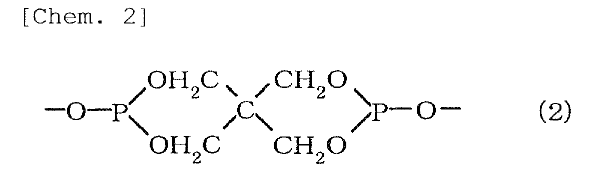 exhibit an effect to specifically improve the melt stability of the polyglycolic acid.

Specific examples of such phosphates having the pentaerythritol skeleton structure include cyclic neopentanetetraylbis(2,6-di-tert-butyl-4-methylphenyl)-phosphite represented by the formula (3): 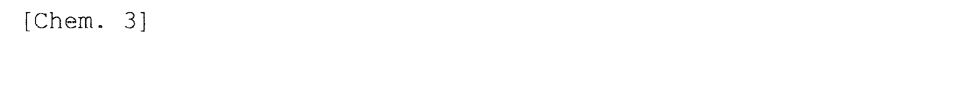 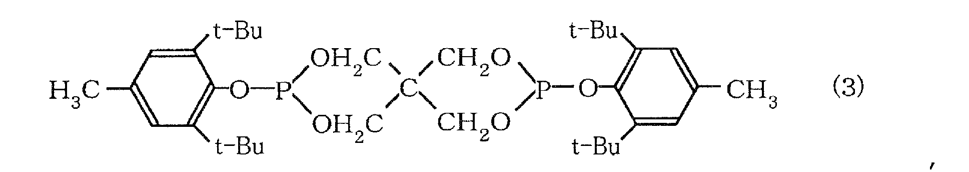 cyclic neopentanetetraylbis(2,4-di-tert-butylphenyl)phosphite represented by the formula (4): 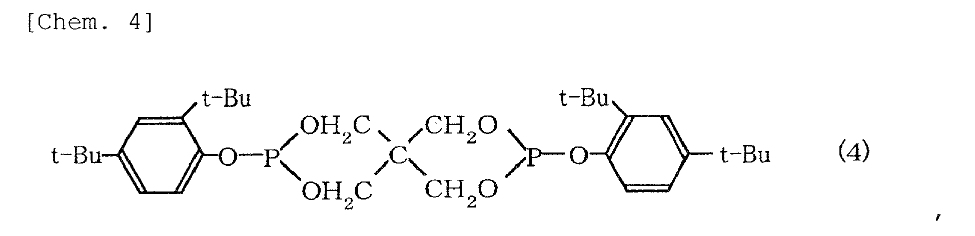 a phosphite antioxidant represented by the formula (5): 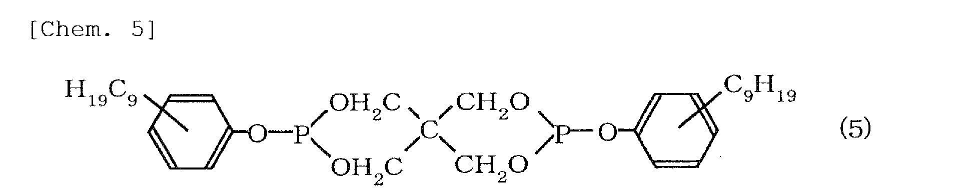 and cyclic neopentanetetraylbis(octadecyl)phosphite represented by the formula (6):

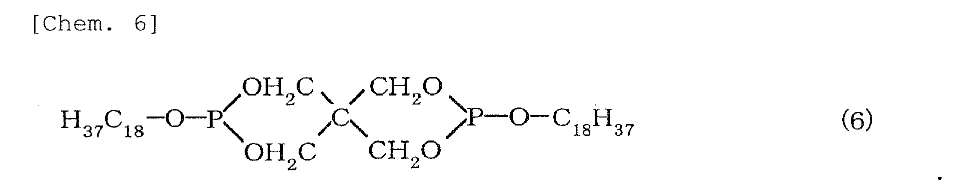

Among the phosphorus compounds, are preferred phosphorus compounds having at least one hydroxyl group and at least one long-chain alkyl ester group represented by the formula (7):

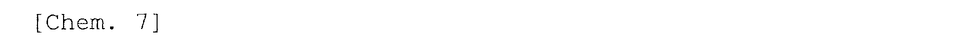

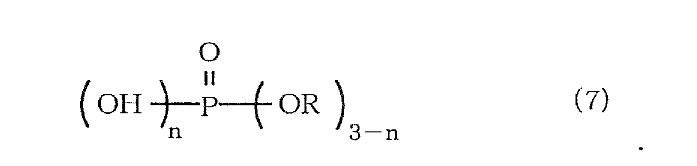

The number of carbon atoms in the long-chain alkyl is preferably within a range of 8 to 24. Specific examples of such phosphorus compounds include mono- or di-stearyl acid phosphate represented by the formula (8):

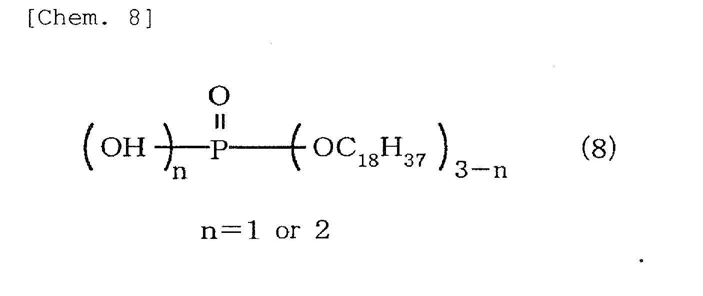

Example of the heavy metal deactivators include 2-hydroxy-N-1H-1,2,4-triazol-3-yl-benzamide represented by the formula (9): 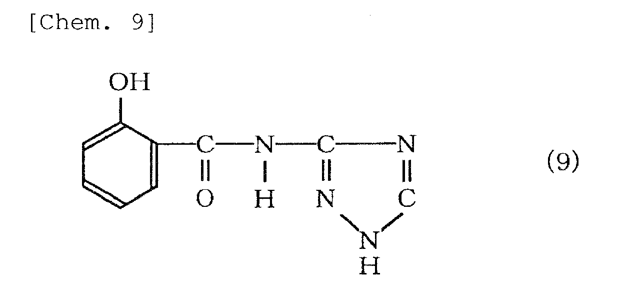 and bis[2-(2-hydroxybenzoyl)hydrazine]dodecanediacid represented by the formula (10):

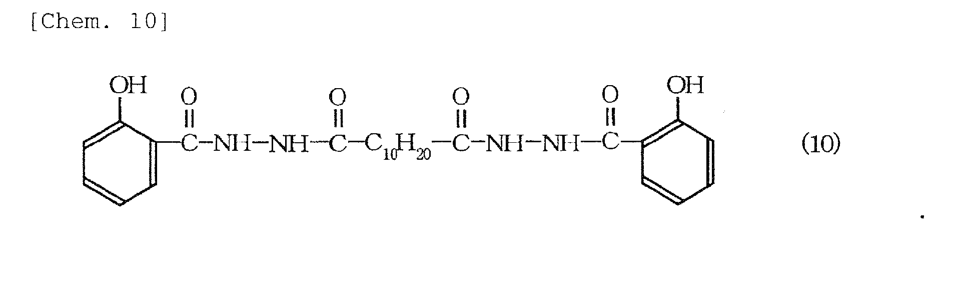

Examples of the metal carbonates include calcium carbonate and strontium carbonate. These heat stabilizers may be used either singly or in any combination thereof.

A proportion of these heat stabilizers incorporated is generally 0.001 to 5 parts by weight, preferably 0.003 to 3 parts by weight, more preferably 0.005 to 1 part by weight per 100 parts by weight of the polyglycolic acid.

The polyglycolic acid used as a raw material in the present invention can be formed into any shape such as powder, particles or pellets so far as it has a relatively high melt viscosity and is in a solid state at ordinary temperature (20±15°C). In order to obtain a low melt viscosity polyglycolic acid excellent in melt stability, both polyglycolic acids of the raw material and the intended product may be powdery or particulate.

In order to improve the handling property, weighability, moldability, etc. of the low melt viscosity polyglycolic acid as the intended product, it is preferable to use a polyglycolic acid in the form of pellets as the high melt viscosity polyglycolic acid of the raw material. When the high melt viscosity polyglycolic acid having a pellet form is used as the raw material, The pellet form is retained upon heat treatment, so that the resulting low melt viscosity polyglycolic acid can be provided in the form of pellets.

In order to produce the pellets, the polyglycolic acid alone or the polyglycolic acid and an additive component such as a heat stabilizer are fed to an extruder, melted and kneaded at a cylinder temperature of from Tm to 260°C and extruded into strand from a die, and the strand is cooled and cut into pellets in accordance with a method known per se in the art.

The size of the pellets is such that both diameter and length are generally 1 to 10 mm, preferably 1.5 to 8 mm, more preferably 2 to 6 mm. However, the size is not limited thereto and may be greater than it.

The low melt viscosity polyglycolic acid according to the present invention is preferably that produced in accordance with the following steps 1 and 2.
(1) A water vapor absorption step 1 of causing a polyglycolic acid having a melt viscosity exceeding 100 Pa·s as measured at a temperature (Tm+20°C) higher by 20°C than the melting point Tm of the polyglycolic acid and a shear rate of 122 sec⁻¹ and being in a solid state at a temperature of 20±15°C to absorb water vapor in the solid state to provide a water vapor-absorbed polyglycolic acid having a water content of at least 1,000 ppm; and
(2) A step 2 of subjecting the water vapor-absorbed polyglycolic acid to a heat treatment at a temperature within a range of from 60°C to a temperature (Tm-5°C) lower by 5°C than the melting point of the polyglycolic acid while retaining the solid state thereof to provide a low melt viscosity polyglycolic acid having a melt viscosity of at most 100 Pa·s as measured at a temperature (Tm+10°C) higher by 10°C than the melting point of the polyglycolic acid and a shear rate of 122 sec⁻¹, a temperature at 3%-weight loss on heating of at least 280°C and a water content of at most 500 ppm, and being in a solid state at a temperature of 20±15°C.

In the water vapor absorption step 1, the polyglycolic acid ("high melt viscosity polyglycolic acid") having a melt viscosity exceeding 100 Pa·s as measured at a temperature (Tm+20°C) higher by 20°C than the melting point Tm of the polyglycolic acid and a shear rate of 122 sec⁻¹ and being in a solid state at a temperature of 20±15°C is used. This high melt viscosity polyglycolic acid is preferably in a solid state in the form of pellets.

In the water vapor absorption step 1, the high melt viscosity polyglycolic acid is caused to absorb water vapor in the solid state to provide a water vapor-absorbed polyglycolic acid having a water content of at least 1,000 ppm. The high melt viscosity polyglycolic acid obtained by synthesis and preferably pelletized is generally dried for avoiding inconveniences such as decomposition and change of properties. The water content in the high melt viscosity polyglycolic acid used as the raw material is generally lower than 1,000 ppm, preferably at most 500 ppm, more preferably at most 300 ppm, still more preferably at most 200 ppm, often at most 100 ppm or at most 50 ppm.

In the water vapor absorption step 1, it is preferable from the viewpoint of causing the polyglycolic acid to absorb water vapor until the desired water content is reached to adopt a method, in which the high melt viscosity polyglycolic acid being in the solid state at ordinary temperature is placed in a thermohygrostat preset to a relative humidity of generally 60% or higher, preferably 70% or higher, more preferably 80% or higher, particularly preferably 85% or higher and a temperature of generally 35°C or higher, preferably 40°C or higher, more preferably 45°C or higher and held for a long period of time. The upper limit of the relative humidity is generally 99%, often 95%. The upper limit of the temperature is generally 90°C, often 80°C.

According to the water vapor absorption method using the thermohygrostat, the high melt viscosity polyglycolic acid being in the solid state at ordinary temperature can be caused to uniformly absorb water vapor and easily controlled so as to reach the desired water content. In the water vapor absorption step 1, any other water vapor absorption method may also be adopted in addition to the mode of using the thermohygrostat so far as the water content in the high melt viscosity polyglycolic acid being in the solid state at ordinary temperature can be heightened up to at least 1,000 ppm.

Other water vapor absorption methods include a method (hereinafter referred to as "water immersion method"), in which the high melt viscosity polyglycolic acid being in the solid state is immersed in water and held at a temperature of generally 35°C or higher, preferably 40°C or higher, more preferably 45°C or higher. More specifically, the pellets of the high melt viscosity polyglycolic acid are placed in a container, and water is added in an amount sufficient to uniformly immerse the pellets. The container is then closed and held at a predetermined temperature for a predetermined period of time to obtain pellets having a desired water content. After the water vapor absorption treatment, water remaining in the container is removed by filtration and/or decantation. According to the water immersion method, it is easy compared with the water vapor absorption method using the thermohygrostat to greatly shorten the water vapor absorption treatment time and increase the water content.

The water vapor absorption treatment time of the high melt viscosity polyglycolic acid being in the solid state at ordinary temperature is generally at least 1 hour, preferably at least 5 hours, more preferably at least 10 hours, particularly preferably at least 20 hours. The upper limit of the water vapor absorption treatment time is generally 200 hours, preferably 150 hours, more preferably 100 hours. The water vapor absorption treatment time may be suitably preset according to the intended water content taking the temperature, relative humidity or amount of water adopted in the water vapor absorption step 1 into consideration. If the water vapor absorption treatment time is too short, it is difficult to cause the polyglycolic acid in the solid state to uniformly absorb water vapor. If the water vapor absorption treatment time is too long, production efficiency is lowered, and moreover there is a possibility that unpreferable change of properties or uneven decomposition may occur.

In the water vapor absorption step 1, the water vapor absorption is conducted until the water content in the high melt viscosity polyglycolic acid being in the solid state at ordinary temperature reaches at least 1,000 ppm, preferably at least 2,000 ppm, more preferably at least 2,500 ppm, particularly preferably at least 3,000 ppm. The upper limit of the water content is generally 150,000 ppm, preferably 100,000 ppm, more preferably 50,000 ppm. However, the water content is not limited to these ranges. The water content in the polyglycolic acid after the water vapor absorption step also includes the amount of water attached to the surfaces of solids such as pellets in addition to the amount of water penetrated in the interior. If the water content is too low, it is difficult to realize a uniform and sufficient low melt viscosity by the heat treatment step 2. If the water content is too high, there is a possibility of causing inconvenience that in the heat treatment step 2, the form of the pellets as a raw material is destroyed, the amount of a low molecular weight component is increased, or a low melt viscosity polyglycolic acid fully dried is not obtained.

In the heat treatment step 2, the water vapor-absorbed polyglycolic acid is subjected to a heat treatment at a temperature within a range of from 60°C to a temperature (Tm-5°C) lower by 5°C than the melting point of the polyglycolic acid while retaining the solid state thereof. The heat treatment temperature is preferably 70 to 200°C, more preferably 80 to 190°C, still more preferably 90 to 180°C. If the heat treatment temperature is too low, it takes a very long time to lower the melt viscosity of the polyglycolic acid to a desired level. If the heat treatment temperature is too high on the other hand, it is difficult to retain the solid state of the polyglycolic acid.

The heat treatment is conducted for a sufficient period of time to lower the melt viscosity of the polyglycolic acid to a desired level. The heat treatment time is preferably 1 to 200 hours, more preferably 2 to 150 hours, particularly preferably 3 to 100 hours. The time sufficient to lower the melt viscosity of the polyglycolic acid to the desired level varies according to the heat treatment temperature. In general, the melt viscosity can be lowered to the desired level in a relatively short period of time as the heat treatment temperature is higher.

The heat treatment step 2 is preferably conducted under dry conditions. A drying step may also be arranged after the heat treatment step. In the production process of the present invention, it is desirable to adopt a process of conducting the heat treatment at the same time as drying in that hydrolysis and drying of the water vapor-absorbed polyglycolic acid are conducted at the same time with good efficiency, and a low melt viscosity polyglycolic acid of high quality is provided. In order to conduct the heat treatment step under the dry conditions, it is desirable to conduct the heat treatment in an atmosphere such as dried air or inert gas (preferably, nitrogen gas). As the dried inert gas, is desirably used, for example, dry nitrogen having a dew point of generally from -60°C to -10°C, preferably from - 50°C to -30°C, often -40°C. The heat treatment is performed by placing the high melt viscosity polyglycolic acid in a high-temperature treater such as an oven under dry heat conditions. In order to conduct the heat treatment while drying the polyglycolic acid, the heat treatment is conducted while passing air or inert gas into the treater. The flow rate of air or inert gas varies according to the amount of the polymer to be treated in the heat treatment step 2 and is generally 0.1 to 30,000 liters/min (L/min), preferably 0.1 to 10,000 L/min, more preferably 0.2 to 1,000 L/min, still more preferably 0.3 to 500 L/min. However, the flow rate is not limited to these ranges.

According to the production process of the present invention, there can be provided a low melt viscosity polyglycolic acid having a melt viscosity of at most 100 Pa·s as measured at a temperature (Tm+10°C) higher by 10°C than the melting point of the polyglycolic acid and a shear rate of 122 sec⁻¹, a temperature at 3%-weight loss on heating of at least 280°C and a water content of at most 500 ppm, and being in a solid state at a temperature of 20±15°C.

According to the production process of the present invention, all the treatments can be conducted while keeping the high melt viscosity polyglycolic acid in a state of solids such as pellets. As a result, a low melt viscosity polyglycolic acid can be obtained in the form of preferably pellets though its melt viscosity is extremely low. The reason why the melt viscosity of the polyglycolic acid is lowered by the production process of the present invention is presumed to be due to the fact that a hydrolysis reaction progresses in the water vapor-absorbed high melt viscosity polyglycolic acid in the solid state.

The water vapor absorption conditions and heat treatment conditions in the solid state can be controlled as described above, whereby a high quality and low melt viscosity polyglycolic acid can be obtained in a solid state by causing a uniform and moderate hydrolysis reaction while retaining the state of solids such as pellets.

The melt viscosity polyglycolic acid obtained by the production process of the present invention is a novel polymer that is not described in literature. The low melt viscosity polyglycolic acid according to the present invention has a melt viscosity of at most 100 Pa·s, preferably at most 90 Pa·s, more preferably 80 Pa·s, particularly preferably at least 75 Pa·s as measured at a temperature (Tm+10°C) higher by 10°C than the melting point Tm thereof and a shear rate of 122 sec⁻¹. When the low melt viscosity polyglycolic acid according to the present invention is used as a masking resin for a circuit board by the double molding process, the melt viscosity thereof is preferably lowered to at most 50 Pa·s, further to at most 40 Pa·s for avoiding deformation of a primary molded product upon injection molding.

In the low melt viscosity polyglycolic acid according to the present invention, the melt flowability thereof upon injection molding becomes better as the melt viscosity thereof is lower, and a pressure upon injection can be reduced. When the primary molded product is molded with a synthetic resin the heat resistance of which is not sufficiently high, the melt viscosity of the polyglycolic acid used as the masking resin is preferably lowered as much as possible.

On the other hand, if the low melt viscosity polyglycolic acid cannot retain the state of solids such as pellets, handling property, weighability, moldability and the like are deteriorated. The lower limit of the melt viscosity of the low melt viscosity polyglycolic acid according to the present invention is generally 1 Pa·s, often 3 Pa·s. The reason why the melt viscosity of the low melt viscosity polyglycolic acid according to the present invention is measured at the temperature (Tm+10°C) higher by 10°C than the melting point Tm thereof and the shear rate of 122 sec⁻¹ is that measurement may become impossible at the measuring temperature (Tm+20°C) of the conventional method because the melt viscosity of this polymer is sufficiently low.

The temperature at 3%-weight loss on heating of the low melt viscosity polyglycolic acid according to the present invention is at least 280°C, preferably at least 290°C, more preferably at least 300°C, particularly preferably at least 320°C. The upper limit of the temperature at 3%-weight loss on heating is generally 360°C, often 355°C. The temperature at 3%-weight loss on heating of the low melt viscosity polyglycolic acid according to the present invention is preferably improved by containing a small amount of the above-described specific heat stabilizer. However, the use of the heat stabilizer is not always required.

On the other hand, the low melt viscosity polyglycolic acid obtained by adjusting the polymerization degree upon synthesis contains a low molecular weight component in a high proportion, and the temperature at 3%-weight loss on heating thereof is generally 260°C or lower. The fact that the temperature at 3%-weight loss on heating is low means the low molecular weight component is easy to be gasified upon melt processing such as injection molding. Even when the above-described specific heat stabilizer is caused to be contained in the low melt viscosity polyglycolic acid obtained by adjusting the polymerization degree upon synthesis, it is difficult to heighten the temperature at 3%-weight loss on heating thereof to 270°C or higher.

The low melt viscosity polyglycolic acid according to the present invention is a dry polymer having a water content of at most 500 ppm, preferably at most 300 ppm, more preferably at most 200 or 100 ppm. The water content in the low melt viscosity polyglycolic acid can be lowered to 50 ppm or lower, further 40 ppm or lower if desired. If the water content in the low melt viscosity polyglycolic acid according to the present invention is too high, such a polymer is difficult to be stored at the predetermined melt viscosity, or the water contained therein is liable to be gasified upon molding. The lower limit of the water content is generally 2 ppm, often 3 ppm. Such a low melt viscosity polyglycolic acid having such a low water content can be suitably obtained by performing the heat treatment step under the dry conditions.

The low melt viscosity polyglycolic acid according to the present invention is in a solid state at a temperature (ordinary temperature; 5 to 35°C) of 20±15°C, preferably in a state of solids of a pellet form. The form of the solid state is substantially the same as the form of the high melt viscosity polyglycolic acid used as the raw material.

The low melt viscosity polyglycolic acid according to the present invention has ester linkages in its main chain, and a carboxyl group formed upon synthesis or hydrolysis is present at both ends thereof, so that the low melt viscosity polyglycolic acid is excellent in adhesion to surfaces of molded products of other synthetic resins and electroless-plated surfaces.

The low melt viscosity polyglycolic acid according to the present invention is a crystalline polymer excellent in melt flowability and adhesion to other materials and inhibited in generation of a gas component, so that a thin covering layer containing a fine circuit pattern can be precision-molded with this polymer by injection molding on the surface of a primary molded product formed from another synthetic resin. The fine circuit pattern is formed in the form of fine grooves. The low melt viscosity polyglycolic acid according to the present invention is excellent in crystallinity, so that when the section of such a groove is observed, the wall of the groove is vertically formed. Therefore, a conductor circuit of a precise pattern can be formed by a plating treatment. The low melt viscosity polyglycolic acid according to the present invention is short in solidification time by crystallization, so that an injection molding cycle can be improved.

The covering layer formed of the low melt viscosity polyglycolic acid according to the present invention is not dissolved in an electroless plating solution or electroplating solution upon an plating treatment. This covering layer is hard to be plated and hard to deposit plating metal particles.

The low melt viscosity polyglycolic acid according to the present invention exhibits decomposability in an aqueous alkali solution, so that the covering layer formed thereof can be removed by a treatment with the aqueous alkali solution. It is not necessary to use an organic solvent for removing the covering layer, and a mechanical release operation is also not required. Therefore, the conductor circuit formed by the plating treatment is not damaged upon removal of the covering layer.

The primary molded product used in the double molding process may exemplify those of liquid crystal polymer, thermoplastic polyester resins, poly(phenylene sulfide) resins, cyclic olefin resins, etc. though not limited thereto.

The low melt viscosity polyglycolic acid according to the present invention is suitable for a resin material used for producing an integrated molded product of a molded product of another synthetic resin with a polyglycolic acid layer by injecting the polyglycolic acid into a mold, in which the synthetic resin molded product has been arranged. The low melt viscosity polyglycolic acid is excellent in melt flowability and melt stability, so that it can also be utilized in uses for molding composite materials by coextruding it with another synthetic resin or extruding and coating it on a base material such as a synthetic resin film or paper.

### EXAMPLES

The present invention will hereinafter be described more specifically by the following Examples and Comparative Examples. However, the scope of the present invention is not limited to these examples. Measuring methods of physical properties and other properties in the present invention are as follows.

### (1) Measuring method of water content

A Karl Fischer moisture meter [CA-100, manufactured by Mitsubishi Chemical Corporation; attached vaporizer: VA-100] equipped with a vaporizer was used to measure a water content in a polymer. Specifically, about 2 g of a polymer sample precisely weighted was placed in the vaporizer heated to 220°C. Dry nitrogen gas was passed from the vaporizer into the Karl Fischer moisture meter. After the polymer sample was placed in the vaporizer, moisture vaporized from the polymer sample was introduced into a Karl Fischer reagent within the Karl Fischer moisture meter following the dry nitrogen gas. A point of time that the conductivity of the Karl Fischer reagent had been reduced by +0.1 µg/S from a background as measured by the coulometric titration method was regarded as an end point.

### (2) Measuring method of melting point

A differential scanning calorimeter TC10A manufactured by METTLER INSTRUMENT AG was used to measure a melting point Tm of a polymer. While passing dry nitrogen gas at a flow rate of 50 ml/min, measuring was conducted in a nitrogen atmosphere. About 10 g of a polymer sample was placed in an aluminum pan and heated at a heating rate of 10°C/min from 50°C to measure the melting point Tm.

### (3) Measuring method of melt viscosity

CAPIROGRAPH 1-C (manufactured by Toyo Seiki Co.) equipped with a capillary (1 mm in diameter x 10 mm in length) was used as a measuring apparatus of a melt viscosity to measure a melt viscosity of a polymer. More specifically, after about 20 g of a polymer sample was introduced into the measuring apparatus heated to a temperature (Tm+10°C) by 10°C than the melting point of the polymer sample or a temperature (Tm+20°C) by 20°C than the melting point of the polymer sample and held for 5 minutes at this temperature, the melt viscosity thereof was measured at a shear rate of 122 sec⁻¹.

### (4) Measuring method of temperature at 3%-weight loss on heating

A thermogravimetric analyzer TC11 manufactured by METTLER INSTRUMENT AG was used to measure a temperature at 3%-weight loss on heating of a polymer. Specifically, 20 mg of a polymer sample was placed in a platinum pan and heated from 50°C to 400°C at a heating rate of 10°C/min in a dry nitrogen atmosphere at 10 ml/min to measure a weight loss rate during that. A temperature at which the weight was reduced by 3% of the weight at the time the measurement had been started was regarded as a temperature at 3%-weight loss on heating.

### [Example 1]

Pellets of a polyglycolic acid resin composition obtained by adding 0.03 part by weight of a heat stabilizer AX-71 (mono- or di-stearyl acid phosphate; product of ADEKA CORPORATION) to 100 parts by weight of a ring-opening polymer of glycolide were used as a polyglycolic acid in a solid state at ordinary temperature.

This polyglycolic acid had a melting point Tm of 220°C, a melt viscosity of 1,010 Pa·s as measured at a temperature (Tm+20°C = 240°C) and a share rate of 122 sec⁻¹, and a water content of 30 ppm. The pellets of the polyglycolic acid were obtained by a process, in which the polyglycolic acid resin composition is melt-extruded into strand from an extruder, and the strand is cooled in water and cut, and had a uniform form of an average particle diameter of 2.8 mm and an average length of 2.7 mm. The temperature at 3%-weight loss on heating of the polyglycolic acid as measured by using the pellets was 352°C.

Fifty grams of the pellets were placed in a glass vial. The glass vial was left to stand in an opened state for 72 hours in a thermohygrostat controlled under high-temperature and high-humidity conditions of a temperature 50°C and a relative humidity of 90% to cause the pellets to absorb water. After 72 hours, the glass vial was taken out of the thermohygrostat, and the pellets in the vial were taken out to measure a water content. As a result, the water content was 6,520 ppm.

These water-absorbed pellets were subjected to a drying and heating treatment for 34 hours in an oven at 120°C in a dry air atmosphere. After 34 hours, the pellets retained their form. The pellets were taken out of the oven to measure a water content. As a result, the water content was 8 ppm.

These pellets were used to measure the melt viscosity of the polyglycolic acid at a temperature (Tm+10°C = 230°C) and a shear rate of 122 sec⁻¹. As a result, the melt viscosity was 39 Pa·s. The same pellets were used to measure the melt viscosity of the polyglycolic acid at a temperature (Tm+20°C = 240°C) and a shear rate of 122 sec⁻¹. As a result, the melt viscosity was 28 Pa·s. The pellets were used to measure a temperature at 3%-weight loss on heating. As a result, the temperature was 334°C. The results are shown in Table 1.

### [Example 2]

The pellets obtained in Example 1 and having the water content of 6,520 ppm were subjected to a drying and heating treatment for 5 hours in an oven at 150°C in a dry air atmosphere. After 5 hours, the pellets retained their form. The pellets were taken out of the oven to measure a water content. As a result, the water content was 10 ppm. These pellets were used to measure the melt viscosity of the polyglycolic acid at a temperature (Tm+10°C = 230°C) and a shear rate of 122 sec⁻¹. As a result, the melt viscosity was 46 Pa·s. The same pellets were used to measure the melt viscosity of the polyglycolic acid at a temperature (Tm+20°C = 240°C) and a shear rate of 122 sec⁻¹. As a result, the melt viscosity was 33 Pa·s. The pellets were used to measure a temperature at 3%-weight loss on heating. As a result, the temperature was 340°C. The results are shown in Table 1.

### [Example 3]

Pellets of a polyglycolic acid resin composition obtained by adding 0.03 part by weight of a heat stabilizer AX-71 (mono- or di-stearyl acid phosphate; product of ADEKA CORPORATION) to 100 parts by weight of a ring-opening polymer of glycolide were used as a polyglycolic acid in a solid state at ordinary temperature.

This polyglycolic acid had a melting point Tm of 220°C, a melt viscosity of 730 Pa·s as measured at a temperature (Tm+20°C = 240°C) and a share rate of 122 sec⁻¹, and a water content of 26 ppm. The pellets of the polyglycolic acid were obtained by a process, in which the polyglycolic acid resin composition is melt-extruded into strand from an extruder, and the strand is cooled in water and cut, and had a uniform form of an average particle diameter of 2.2 mm and an average length of 2.5 mm. The temperature at 3%-weight loss on heating of the polyglycolic acid as measured by using the pellets was 350°C.

Five thousand grams of the pellets were placed in a stainless vat. The stainless vat was left to stand in an opened state for 48 hours in a thermohygrostat controlled under high-temperature and high-humidity conditions of a temperature 50°C and a relative humidity of 90% to cause the pellets to absorb water. After 48 hours, the stainless vat was taken out of the thermohygrostat, and the pellets in the vat were taken out to measure a water content. As a result, the water content was 3,600 ppm.

These water-absorbed pellets were subjected to a drying and heating treatment for 72 hours in an oven at 120°C in a dry nitrogen atmosphere. After 72 hours, the pellets retained their form. The pellets were taken out of the oven to measure a water content. As a result, the water content was 9 ppm.

These pellets were used to measure the melt viscosity of the polyglycolic acid at a temperature (Tm+10°C = 230°C) and a shear rate of 122 sec⁻¹. As a result, the melt viscosity was 71 Pa·s. The same pellets were used to measure the melt viscosity of the polyglycolic acid at a temperature (Tm+20°C = 240°C) and a shear rate of 122 sec⁻¹. As a result, the melt viscosity was 51 Pa·s. The pellets were used to measure a temperature at 3%-weight loss on heating. As a result, the temperature was 342°C. The results are shown in Table 1.

### [Example 4]

Five thousand grams of the same pellets used in Example 3 were placed in a stainless vat. The stainless vat was left to stand in an opened state for 72 hours in a thermohygrostat controlled under high-temperature and high-humidity conditions of a temperature 50°C and a relative humidity of 90% to cause the pellets to absorb water. After 72 hours, the stainless vat was taken out of the thermohygrostat to measure a water content in the pellets in the vat. As a result, the water content was 9,200 ppm.

These water-absorbed pellets were subjected to a drying and heating treatment for 72 hours in an oven at 120°C in a dry nitrogen atmosphere. After 72 hours, the pellets retained their form. The pellets were taken out of the oven to measure a water content. As a result, the water content was 11 ppm. These pellets were used to measure the melt viscosity of the polyglycolic acid at a temperature (Tm+10°C = 230°C) and a shear rate of 122 sec⁻¹. As a result, the melt viscosity was 8 Pa·s. The same pellets were used to measure the melt viscosity of the polyglycolic acid at a temperature (Tm+20°C = 240°C) and a shear rate of 122 sec⁻¹. As a result, the measurement of the melt viscosity was impossible because the melt flowability of the polymer was too high. The pellets were used to measure a temperature at 3%-weight loss on heating. As a result, the temperature was 338°C. The results are shown in Table 1.

**[Table 1]**

| | Example | | | |
|---|---|---|---|---|
| | 1 | 2 | 3 | 4 |
| Raw material PGA | | | | |
| Melt viscosity (Pa·s) (240°C, 122/s) | 1010 | 1010 | 730 | 730 |
| Water content (ppm) | 30 | 30 | 26 | 26 |
| Temperature at 3%-weight loss on heating (°C) | 352 | 352 | 350 | 350 |
| Pellets (diameter mm/length mm) | 2.8/2.7 | 2.8/2.7 | 2.2/2.5 | 2.2/2.5 |
| Water vapor absorption step (50°C, 90% RH) | | | | |
| Time (h) | 72 | 72 | 48 | 72 |
| Water content (ppm) | 6,520 | 6,520 | 3,600 | 9,200 |
| Heat treatment step | | | | |
| Atmosphere gas | Air | Air | Nitrogen | Nitrogen |
| Temperature (°C) | 120 | 150 | 120 | 120 |
| Time (h) | 34 | 5 | 72 | 72 |
| Low melt viscosity PGA | | | | |
| Water content (ppm) | 8 | 10 | 9 | 11 |
| Melt viscosity (Pa·s) | | | | |
| 230°C, 122/s | 39 | 46 | 71 | 8 |
| 240°C, 122/s | 28 | 33 | 51 | - |
| Temperature at 3%-weight loss on heating (°C) | 334 | 340 | 342 | 338 |

### [Comparative Example 1]

Five hundred grams of glycolic acid [Wako Pure Chemical Industries, Ltd] were charged into an autoclave and heated from 170°C to 200°C over 2 hours while stirring under ordinary pressure, and subjected to a polycondensation reaction while distilling out water formed. The internal pressure of the autoclave was then reduced to 5.0 kPa, and heating was conducted for 4 hours at 210°C to distill off a low-boiling component such as an unreacted raw material. The polycondensation product was crystallized and solidified, taken out of the autoclave, and ground to obtain a powdery polyglycolic acid.

The melting point Tm of this polyglycolic acid was 218°C. This polyglycolic acid was used to measure a melt viscosity of the polyglycolic acid at a temperature (Tm+10°C = 228°C) and a shear rate of 122 sec⁻¹. As a result, the melt viscosity was 10 Pa·s. The temperature at 3%-weight loss on heating of this polyglycolic acid was measured and found to be 252°C.

This powdery polyglycolic acid is too low in melt viscosity and hence cannot be extruded into strand by means of an extruder to produce pellets. When it is intended to melt such a low melt viscosity polyglycolic acid in an extruder and continuously extrude the melt into strand from a die having a hole, the strand sags, and so it is extremely difficult or substantially impossible to produce pellets. This powdery polyglycolic acid is too low in temperature at 3%-weight loss on heating and hence liable to generate a gas component when it is melt-extruded.

The above-described polyglycolic acid obtained by synthesis does not contain a heat stabilizer. Thus, the temperature at 3%-weight loss on heating of a polyglycolic acid resin composition obtained by adding 0.03 part by weight of a heat stabilizer AX-71 (mono- or di-stearyl acid phosphate; product of ADEKA CORPORATION) to 100 parts by weight of this polyglycolic acid was measured. As a result, the temperature was as low as 267°C, and so this composition was liable to generate a gas component.

### [Example 5]

Pellets of a polyglycolic acid resin composition obtained by adding 0.03 part by weight of a heat stabilizer AX-71 (mono- or di-stearyl acid phosphate; product of ADEKA CORPORATION) to 100 parts by weight of a ring-opening polymer of glycolide were used as a polyglycolic acid in a solid state at ordinary temperature.

This polyglycolic acid had a melting point Tm of 220°C, a melt viscosity of 666 Pa·s as measured at a temperature (Tm+20°C = 240°C) and a share rate of 122 sec⁻¹, and a water content of 30 ppm. The pellets of the polyglycolic acid were obtained by a process, in which the polyglycolic acid resin composition is melt-extruded into strand from an extruder, and the strand is cooled in water and cut, and had a uniform form of an average particle diameter of 2.8 mm and an average length of 3.0 mm. The temperature at 3%-weight loss on heating of the polyglycolic acid as measured by using the pellets was 349°C.

Two thousand grams of the pellets were placed in a plastic box, and 4 liters of water was poured therein. The plastic box was left to stand in a closed state for 36 hours in a thermostat at a temperature 50°C to cause the pellets to absorb water (water vapor absorption step). After 36 hours, the plastic box was taken out of the thermostat, water remaining therein was removed by filtration, and the pellets were recovered. The water content in the pellets was measured and found to be 23,750 ppm.

These water-absorbed pellets were subjected to a drying and heating treatment for 3 hours in an oven at 150°C in a dry nitrogen atmosphere at a flow rate of 1.0 L/min. After 3 hours, the pellets retained their form. The pellets were taken out of the oven to measure a water content. As a result, the water content was 34 ppm.

These pellets were used to measure the melt viscosity of the polyglycolic acid at a temperature (Tm+10°C = 230°C) and a shear rate of 122 sec⁻¹. As a result, the melt viscosity was 19 Pa·s. The same pellets were used to measure the melt viscosity of the polyglycolic acid at a temperature (Tm+20°C = 240°C) and a shear rate of 122 sec⁻¹. As a result, the melt viscosity was 15 Pa·s. The pellets were used to measure a temperature at 3%-weight loss on heating. As a result, the temperature was 336°C. The results are shown in Table 2.

### [Example 6]

The pellets obtained in the water vapor absorption step of Example 5 and having the water content of 23,750 ppm were subjected to a drying and heating treatment for 3 hours in an oven at 150°C in a dry nitrogen atmosphere at a flow rate of 0.6 L/min. After 3 hours, the pellets retained their form. The pellets were taken out of the oven to measure a water content. As a result, the water content was 20 ppm. These pellets were used to measure the melt viscosity of the polyglycolic acid at a temperature (Tm+10°C = 230°C) and a shear rate of 122 sec⁻¹. As a result, the melt viscosity was 14 Pa·s. The same pellets were used to measure the melt viscosity of the polyglycolic acid at a temperature (Tm+20°C = 240°C) and a shear rate of 122 sec⁻¹. As a result, the melt viscosity was 10 Pa·s. The pellets were used to measure a temperature at 3%-weight loss on heating. As a result, the temperature was 329°C. The results are shown in Table 2.

### [Example 7]

The pellets obtained in the water vapor absorption step of Example 5 and having the water content of 23,750 ppm were subjected to a drying and heating treatment for 3 hours in an oven at 150°C in a dry nitrogen atmosphere at a flow rate of 2.7 L/min. After 3 hours, the pellets retained their form. The pellets were taken out of the oven to measure a water content. As a result, the water content was 8 ppm. These pellets were used to measure the melt viscosity of the polyglycolic acid at a temperature (Tm+10°C = 230°C) and a shear rate of 122 sec⁻¹. As a result, the melt viscosity was 21 Pa·s. The same pellets were used to measure the melt viscosity of the polyglycolic acid at a temperature (Tm+20°C = 240°C) and a shear rate of 122 sec⁻¹. As a result, the melt viscosity was 14 Pa·s. The pellets were used to measure a temperature at 3%-weight loss on heating. As a result, the temperature was 330°C. The results are shown in Table 2.

### [Example 8]

The pellets obtained in the water vapor absorption step of Example 5 and having the water content of 23,750 ppm were placed in an aluminum bag and left to stand for 24 hours in a closed state. Water attached to the surfaces of the pellets in the water vapor absorption step was caused to be absorbed in the pellets by this treatment. Thereafter, the pellets were subjected to a drying and heating treatment for 3 hours in an oven at 150°C in a dry nitrogen atmosphere at a flow rate of 1.0 L/min. After 3 hours, the pellets retained their form. The pellets were taken out of the oven to measure a water content. As a result, the water content was 15 ppm. These pellets were used to measure the melt viscosity of the polyglycolic acid at a temperature (Tm+10°C = 230°C) and a shear rate of 122 sec⁻¹. As a result, the melt viscosity was 20 Pa·s. The same pellets were used to measure the melt viscosity of the polyglycolic acid at a temperature (Tm+20°C = 240°C) and a shear rate of 122 sec⁻¹. As a result, the melt viscosity was 15 Pa·s. The pellets were used to measure a temperature at 3%-weight loss on heating. As a result, the temperature was 328°C. The results are shown in Table 2.

### [Example 9]

Water was added to the pellets obtained in the water vapor absorption step of Example 5 and having the water content of 23,750 ppm to increase the water content to 51,000 ppm. Thereafter, the pellets were subjected to a drying and heating treatment for 3 hours in an oven at 150°C in a dry nitrogen atmosphere at a flow rate of 1.0 L/min. After 3 hours, the pellets retained their form. The pellets were taken out of the oven to measure a water content. As a result, the water content was 17 ppm. These pellets were used to measure the melt viscosity of the polyglycolic acid at a temperature (Tm+10°C = 230°C) and a shear rate of 122 sec⁻¹. As a result, the melt viscosity was 17 Pa·s. The same pellets were used to measure the melt viscosity of the polyglycolic acid at a temperature (Tm+20°C = 240°C) and a shear rate of 122 sec⁻¹. As a result, the melt viscosity was 12 Pa·s. The pellets were used to measure a temperature at 3%-weight loss on heating. As a result, the temperature was 330°C. The results are shown in Table 2.

**[Table 2]**

| | Example | | | | |
|---|---|---|---|---|---|
| | 5 | 6 | 7 | 8 | 9 |
| Raw material PGA | | | | | |
| Melt viscosity (Pa·s) (240°C, 122/s) | 666 | 666 | 666 | 666 | 666 |
| Water content (ppm) | 30 | 30 | 30 | 30 | 30 |
| Temperature at 3%-weight loss on heating (°C) | 349 | 349 | 349 | 349 | 349 |
| Pellets (diameter mm/length mm) | 2.8/3.0 | 2.8/3.0 | 2.8/3.0 | 2.8/3.0 | 2.8/3.0 |
| Water vapor absorption step | | | | | |
| Immersion in water (pellets, g/ water, L) | 2,000/4 | 2,000/4 | 2,000/4 | 2,000/4 | 2,000/4 |
| Temperature (°C) | 50 | 50 | 50 | 50 | 50 |
| Time (h) | 36 | 36 | 36 | 36 | 36 |
| Water content (ppm) | 23,750 | 23,750 | 23,750 | 23,750 | 23,750 |
| Stored in aluminum bag (h) | - | - | - | 24 | - |
| Water content after addition of Water (ppm) | - | - | - | - | 51,000 |
| Heat treatment step | | | | | |
| Flow rate of nitrogen gas (L/min) | 1.0 | 0.6 | 2.7 | 1.0 | 1.0 |
| Temperature (°C) | 150 | 150 | 150 | 150 | 150 |
| Time (h) | 3 | 3 | 3 | 3 | 3 |
| Low melt viscosity PGA | | | | | |
| Water content (ppm) | 34 | 20 | 8 | 15 | 17 |
| Melt viscosity (Pa·s) | | | | | |
| 230°C, 122/s | 19 | 14 | 21 | 20 | 17 |
| 240°C, 122/s | 15 | 10 | 14 | 15 | 12 |
| Temperature at 3%-weight loss on heating (°C) | 336 | 329 | 330 | 328 | 330 |

### [Example 10]

Ten thousand grams of the same pellets having the water content of 30 ppm as those used in Example 5 were placed in a 20-L autoclave, and 10 liters of water was poured therein. Agitation was conducted for 48 hours at a temperature of 50°C in a state that the autoclave was closed to cause the pellets to absorb water. After 48 hours, water remaining in the autoclave was removed by filtration, and the pellets were recovered. The water content in the pellets was measured and found to be 23,564 ppm.

These water-absorbed pellets were subjected to a drying and heating treatment for 7 hours in a rotary dryer at 150°C in a dry nitrogen atmosphere at a flow rate of 300 L/min. After 7 hours, the pellets retained their form. After the heat treatment, the water content in the pellets was measured and found to be 34 ppm.

These pellets were used to measure the melt viscosity of the polyglycolic acid at a temperature (Tm+10°C = 230°C) and a shear rate of 122 sec⁻¹. As a result, the melt viscosity was 64 Pa·s. The same pellets were used to measure the melt viscosity of the polyglycolic acid at a temperature (Tm+20°C = 240°C) and a shear rate of 122 sec⁻¹. As a result, the melt viscosity was 53 Pa·s. The pellets were used to measure a temperature at 3%-weight loss on heating. As a result, the temperature was 345°C. The results are shown in Table 3.

### [Example 11]

Ten thousand grams of the same pellets having the water content of 30 ppm as those used in Example 5 were placed in a 20-L autoclave, and 10 liters of water was poured therein. Agitation was conducted for 24 hours at a temperature of 50°C in a state that the autoclave was closed to cause the pellets to absorb water. After 24 hours, water remaining in the autoclave was removed by filtration, and the pellets were recovered. The water content in the pellets was measured and found to be 22,580 ppm.

These water-absorbed pellets were subjected to a drying and heating treatment for 7 hours in a rotary dryer at 150°C in a dry nitrogen atmosphere at a flow rate of 300 L/min. After 7 hours, the pellets retained their form.
After the heat treatment, the water content in the pellets was measured and found to be 24 ppm.

These pellets were used to measure the melt viscosity of the polyglycolic acid at a temperature (Tm+10°C = 230°C) and a shear rate of 122 sec⁻¹. As a result, the melt viscosity was 41 Pa·s. The same pellets were used to measure the melt viscosity of the polyglycolic acid at a temperature (Tm+20°C = 240°C) and a shear rate of 122 sec⁻¹. As a result, the melt viscosity was 37 Pa·s. The pellets were used to measure a temperature at 3%-weight loss on heating. As a result, the temperature was 343°C. The results are shown in Table 3.

### [Example 12]

Ten thousand grams of the same pellets having the water content of 30 ppm as those used in Example 5 were placed in a 20-L autoclave, and 10 liters of water was poured therein. Agitation was conducted for 36 hours at a temperature of 55°C in a state that the autoclave was closed to cause the pellets to absorb water. After 36 hours, water remaining in the autoclave was removed by filtration, and the pellets were recovered. The water content in the pellets was measured and found to be 24,210 ppm.

These water-absorbed pellets were subjected to a drying and heating treatment for 7 hours in a rotary dryer at 150°C in a dry nitrogen atmosphere at a flow rate of 300 L/min. After 7 hours, the pellets retained their form. After the heat treatment, the water content in the pellets was measured and found to be 38 ppm.

These pellets were used to measure the melt viscosity of the polyglycolic acid at a temperature (Tm+10°C = 230°C) and a shear rate of 122 sec⁻¹. As a result, the melt viscosity was 22 Pa·s. The same pellets were used to measure the melt viscosity of the polyglycolic acid at a temperature (Tm+20°C = 240°C) and a shear rate of 122 sec⁻¹. As a result, the melt viscosity was 12 Pa·s. The pellets were used to measure a temperature at 3%-weight loss on heating. As a result, the temperature was 330°C. The results are shown in Table 3.

### [Example 13]

Ten thousand grams of the same pellets having the water content of 30 ppm as those used in Example 5 were placed in a 20-L autoclave, and 10 liters of water was poured therein. Agitation was conducted for 48 hours at a temperature of 55°C in a state that the autoclave was closed to cause the pellets to absorb water. After 48 hours, water remaining in the autoclave was removed by filtration, and the pellets were recovered. The water content in the pellets was measured and found to be 22,420 ppm.

These water-absorbed pellets were subjected to a drying and heating treatment for 7 hours in a rotary dryer at 150°C in a dry nitrogen atmosphere at a flow rate of 300 L/min. After 7 hours, the pellets retained their form. After the heat treatment, the water content in the pellets was measured and found to be 40 ppm.

These pellets were used to measure the melt viscosity of the polyglycolic acid at a temperature (Tm+10°C = 230°C) and a shear rate of 122 sec⁻¹. As a result, the melt viscosity was 13 Pa·s. The same pellets were used to measure the melt viscosity of the polyglycolic acid at a temperature (Tm+20°C = 240°C) and a shear rate of 122 sec⁻¹. As a result, the melt viscosity was 5 Pa·s. The pellets were used to measure a temperature at 3%-weight loss on heating. As a result, the temperature was 324°C. The results are shown in Table 3.

**[Table 3]**

| | Example | | | |
|---|---|---|---|---|
| | 10 | 11 | 12 | 13 |
| Raw material PGA | | | | |
| Melt viscosity (Pa·s) (240°C, 122/s) | 666 | 666 | 666 | 666 |
| Water content (ppm) | 30 | 30 | 30 | 30 |
| Temperature at 3%-weight loss on heating (°C) | 349 | 349 | 349 | 349 |
| Pellets (diameter mm/length mm) | 2.8/3.0 | 2.8/3.0 | 2.8/3.0 | 2.8/3.0 |
| Water vapor absorption step | | | | |
| Immersion in water (pellets, g/ water, L) | 10,000/10 | 10,000/10 | 10,000/10 | 10,000/10 |
| Agitation in autoclave | | | | |
| Temperature (°C) | 50 | 55 | 55 | 55 |
| Time (h) | 48 | 24 | 36 | 48 |
| Water content (ppm) | 23,564 | 22,580 | 24,210 | 22,420 |
| Heat treatment step | | | | |
| Flow rate of nitrogen gas (L/min) | 300 | 300 | 300 | 300 |
| Temperature (°C) | 150 | 150 | 150 | 150 |
| Time (h) | 7 | 7 | 7 | 7 |
| Low melt viscosity PGA | | | | |
| Water content (ppm) | 34 | 24 | 38 | 40 |
| Melt viscosity (Pa·s) | | | | |
| 230°C, 122/s | 64 | 41 | 22 | 13 |
| 240°C, 122/s | 53 | 37 | 12 | 5 |
| Temperature at 3%-weight loss on heating (°C) | 345 | 343 | 330 | 324 |

### INDUSTRIAL APPLICABILITY

The low melt viscosity polyglycolic acid according to the present invention permits precision-molding a finely patterned thin film on the surface of a molded product of another synthetic resin by injection molding, and is excellent in resistance to plating and soluble in an aqueous alkali solution, so that it can be utilized as, for example, a masking resin for MID (three-dimensional injection-molded circuit part). The low melt viscosity polyglycolic acid according to the present invention can be applied to a wide variety of technical fields of which excellent melt flowability upon molding, precision moldability, adhesion to other materials, gas barrier properties and the like are required.

## Claims

1. A low melt viscosity polyglycolic acid having a melt viscosity of at most 100 Pa·s as measured at a temperature (Tm+10°C) higher by 10°C than the melting point Tm of the polyglycolic acid and a shear rate of 122 sec⁻¹, a temperature at 3%-weight loss on heating of at least 280°C and a water content of at most 500 ppm, and being in a solid state at a temperature of 20±15°C.

2. The low melt viscosity polyglycolic acid according to claim 1, wherein the melt viscosity measured at a temperature (Tm+10°C) higher by 10°C than the melting point Tm and a shear rate of 122 sec⁻¹ is 3 to 80 Pa·s.

3. The low melt viscosity polyglycolic acid according to claim 1, wherein the temperature at 3%-weight loss on heating is 280 to 360°C.

4. The low melt viscosity polyglycolic acid according to claim 1, wherein the water content is 2 to 100 ppm.

5. The low melt viscosity polyglycolic acid according to claim 1, which is a product obtained by subjecting a polyglycolic acid having a melt viscosity exceeding 100 Pa·s as measured at a temperature (Tm+20°C) higher by 20°C than the melting point Tm of the polyglycolic acid and a shear rate of 122 sec⁻¹ and being in a solid state at a temperature of 2.0±155°C to a hydrolysis treatment while retaining the solid state thereof.

6. The low melt viscosity polyglycolic acid according to claim 1, which is in a state of solids of a pellet form.

7. The low melt viscosity polyglycolic acid according to claim 1, which is a polyglycolic acid resin composition comprising at least one heat stabilizer selected from the group consisting of heavy metal deactivators, phosphates having a pentaerythritol skeleton structure, phosphorus compounds having at least one hydroxyl group and at least one long-chain alkyl ester group, and metal carbonates.

8. A production process of a low melt viscosity polyglycolic acid, comprising the following steps 1 and 2:
(1) a water vapor absorption step 1 of causing a polyglycolic acid having a melt viscosity exceeding 100 Pa·s as measured at a temperature (Tm+20°C) higher by 20°C than the melting point Tm of the polyglycolic acid and a shear rate of 122 sec⁻¹ and being in a solid state at a temperature of 20±15°C to absorb water vapor in the solid state to provide a water vapor-absorbed polyglycolic acid having a water content of at least 1,000 ppm; and
(2) a step 2 of subjecting the water vapor-absorbed polyglycolic acid to a heat treatment at a temperature within a range of from 60°C to a temperature (Tm-5°C) lower by 5°C than the melting point of the polyglycolic acid while retaining the solid state thereof to provide a low melt viscosity polyglycolic acid having a melt viscosity of at most 100 Pa·s as measured at a temperature (Tm+10°C) higher by 10°C than the melting point of the polyglycolic acid and a shear rate of 122 sec⁻¹, a temperature at 3%-weight loss on heating of at least 280°C and a water content of at most 500 ppm, and being in a solid state at a temperature of 20±15°C.

9. The production process according to claim 8, wherein in the step 1, a polyglycolic acid having a melt viscosity of 500 to 4,000 Pa·s as measured at a temperature (Tm+20°C) higher by 20°C than the melting point Tm of the polyglycolic acid and a shear rate of 122 sec⁻¹ is used.

10. The production process according to claim 8, wherein in the step 1, the polyglycolic acid being in the solid state at the temperature of 20±10°C is caused to absorb water vapor to provide a water vapor-absorbed polyglycolic acid having a water content of 2,000 to 100,000 ppm.

11. The production process according to claim 8, wherein in the step 1, the polyglycolic acid being in the solid state at the temperature of 20±10°C is held in an atmosphere of a relative humidity of 60 to 99% and a temperature of 35 to 90°C, thereby causing the polyglycolic acid to absorb water vapor to provide the water vapor-absorbed polyglycolic acid.

12. The production process according to claim 8, wherein in the step 2, the heat treatment is conducted while passing air or inert gas.

13. The production process according to claim 8, wherein in the step 1, a polyglycolic acid being in a state of solids of a pellet form is used, and in the step 2, a low melt viscosity polyglycolic acid in the solid state retaining the pellet form is provided.

14. The production process according to claim 8, wherein in the step 1, a polyglycolic acid resin composition comprising at least one heat stabilizer selected from the group consisting of heavy metal deactivators, phosphates having a pentaerythritol skeleton structure, phosphorus compounds having at least one hydroxyl group and at least one long-chain alkyl ester group, and metal carbonates is used.

15. The production process according to claim 8, wherein the heat treatment in the step 2 is a heat treatment for the water vapor-absorbed polyglycolic acid under dry conditions, whereby hydrolysis and drying of the water vapor-absorbed polyglycolic acid are conducted at the same time.

16. The production process according to claim 8, wherein the heat treatment under the dry conditions in the step 2 is a heat treatment for the water vapor-absorbed polyglycolic acid under an atmosphere of a dried inert gas.

17. Use of the low melt viscosity polyglycolic acid according to any one of claims 1 to 7 for producing an integrated molded product of a molded product of another synthetic resin with a polyglycolic acid layer by injecting the polyglycolic acid into a mold, in which the synthetic resin molded product has been arranged.
